# EUROPÄISCHE PATENTSCHRIFT

(11) **EP 2 411 634 B1**
(45) Veröffentlichungstag und Bekanntmachung des Hinweises auf die Patenterteilung: **04.01.2017**
(21) Anmeldenummer: 10708143.2
(22) Anmeldetag: 11.03.2010
(51) Int. Cl.: F01N 3/025, F01N 3/36, F01N 13/18

(54) **SYSTEM ZUM EINLEITEN VON KRAFTSTOFFEN IN DEN ABGASSTRANG EINES KRAFTFAHRZEUGS**
SYSTEM FOR INTRODUCING FUELS INTO THE EXHAUST TRACT OF A MOTOR VEHICLE
SYSTÈME D'INTRODUCTION DE CARBURANT DANS LE SYSTÈME D'ÉCHAPPEMENT D'UN VÉHICULE AUTOMOBILE

(30) Priorität: 23.03.2009 DE 102009013664
(43) Veröffentlichungstag der Anmeldung: 01.02.2012
(73) Patentinhaber: Tenneco GmbH, 67840 Edenkoben (DE)
(72) Erfinder: ELLER, Martin, 71642 Ludwigsburg (DE); BRICHZIN, Volker, 71634 Ludwigsburg (DE); FRIEDRICH, Christian Dr., 76829 Landau (DE); INCLÁN, Tobias, F-67630 Lauterbourg (FR)
(74) Vertreter: Twelmeier Mommer & Partner
(86) Internationale Anmeldenummer: PCT/EP2010/001542
(87) Internationale Veröffentlichungsnummer: WO 2010/108604

(56) Entgegenhaltungen:
- DE-A1-102005 034 888
- DE-A1-102006 011 670

## Beschreibung

Die Erfindung betrifft ein System zum Einleiten von Kraftstoff in den Abgasstrang eines Kraftfahrzeugs. Ein System mit den im Oberbegriff des Anspruchs 1 angegebenen Merkmalen ist aus DE 10 2005 034 888 A1 sowie aus DE 10 2006 011 670 A1 bekannt.

Moderne Motoren verbrennen zunehmend magerere Kraftstoffgemische, so dass sich im Abgas relativ hohe Sauerstoffkonzentrationen und Stickoxidkonzentrationen ergeben. Derartige Abgase können mit modernen Fahrzeugkatalysatoren, beispielsweise NOx-Speicherkatalysatoren, gereinigt werden, wobei in regelmäßigen Abständen zum Abbau der Stickoxide eine reduzierende Atmosphäre erzeugt werden muss. Dies lässt sich am einfachsten dadurch erreichen, dass bei Bedarf etwas Kraftstoff in den Abgasstrang eingebracht wird.

Aufgabe der Erfindung ist es, einen Weg aufzuzeigen, wie die Kosten der Abgasreinigung bei Kraftfahrzeugen gesenkt werden können.

Diese Aufgabe wird durch ein System mit den im Anspruch 1 angegebenen Merkmalen sowie einen Kraftstoffverdampfer für ein solches System gemäß Anspruch 3 gelöst. Vorteilhafte Weiterbildungen der Erfindung sind Gegenstand der Unteransprüche.

Ein erfindungsgemäßes System hat einen Kraftstoffverdampfer, der ein Gehäuse mit einem Einlass und einem Auslass sowie einen in dem Gehäuse angeordneten Heizkörper aufweist, und eine Pumpe, um Kraftstoff über den Einlass in den Kraftstoffverdampfer zur Pumpe. Das Verdampfen von Kraftstoff ermöglicht zwar vorteilhaft eine gute Verteilung von Kraftstoff im Abgasstrang, jedoch besteht im Verdampfer die Gefahr einer Verkokung oder Versottung. Durch Ölkohle im Verdampfer kann die Kraftstoffzufuhr behindert oder sogar blockiert werden, so dass der Kraftstoffverdampfer vorzeitig ausfällt.

Indem bei einem erfindungsgemäßen System ein Einlass der Pumpe an eine Verzweigung angeschlossen ist, die einen ersten Zweig zum Zuführen von Kraftstoff und einem zweiten Zweig zum Zuführen von Luft aufweist, kann der Kraftstoffverdampfer durch Zuführen von Luft regeneriert werden. Durch Einleiten von Luft kann nämlich Ölkohle in dem Kraftstoffverdampfer verbrannt werden. Vorteilhaft wird bei einem erfindungsgemäßen System die Zufuhr von Frischluft mittels der zum Pumpen von Kraftstoff ohnehin vorhandenen Pumpe erreicht, so dass der zusätzliche Aufwand eines erfindungsgemäßen Systems minimal ist. Überraschender Weise kann dieselbe Pumpe sowohl zum Pumpen von flüssigem Kraftstoff als auch zum Pumpen von Luft verwendet werden ohne durch Trockengehen zerstört zu werden. Bei einem erfindungsgemäßen System wird die Pumpe nämlich stets nur für kurze Zeit, typischerweise 0,5 bis 2 Minuten, zum Pumpen von Luft verwendet und anschließend wieder von Kraftstoff durchströmt, also erneut geschmiert.

Die beiden Zweige eines erfindungsgemäßen Systems können beispielsweise jeweils mit einem separaten Ventil absperrbar sein, wobei die Ventile von einer zentralen Steuereinheit nach Bedarf geschaltet werden, um in den Kraftstoffverdampfer entweder Luft oder Kraftstoff einzuleiten. Bevorzugt ist die Verzweigung jedoch ein Wegeventil, insbesondere ein 2/1 Wegeventil, mit dem wahlweise der erste Zweig oder der zweite Zweig absperrbar sind. Auf diese Weise kann mit besonders geringem Aufwand ein erfindungsgemäßes System verwirklicht werden. Im einfachsten Fall genügt es, ein Wegeventil in die Zuleitung der Pumpe einzubauen. Je nach Schaltzustand des Wegeventils ist die Pumpe dann entweder an eine Kraftstoffzuleitung oder über den anderen Anschluss des Wegeventils an Umgebungsluft angeschlossen.

Ein erfindungsgemäßer Kraftstoffverdampfer hat ein Gehäuse mit einem Einlass und einem Auslass sowie einem in dem Gehäuse angeordneten Heizkörper. Das Gehäuse ist ein mehrteiliges Gehäuse, wobei ein Gehäusehauptteil den stabförmig ausgebildeten Heizkörper umgibt und mit einem Gehäuseendstück zusammengefügt ist, das den Auslass aufweist. Ein mehrteiliger Gehäuseaufbau hat den Vorteil, dass dem Auslass eine für die Verteilung des Kraftstoffs in dem Abgasstrang vorteilhafte Form, beispielsweise eine Düsen- oder Diffusorform, gegeben und andererseits die Fertigung vereinfacht werden kann, da das Einbringen des Heizkörpers in einen Gehäusehauptteil und ein anschließendes zusammenfügen der Gehäuseteile sehr einfach möglich ist, beispielsweise indem der Gehäusehauptteil mit dem Gehäuseendstück zusammen gesteckt wird, insbesondere das Gehäuseendstück in den Gehäusehauptteil gesteckt wird. Das Ineinanderstecken lässt sich bei der Herstellung leicht durchführen und führt vorteilhaft zu überlappenden Flächen der beiden Gehäuseteile, die für eine stoffschlüssige Verbindung, beispielsweise durch Verschweißen oder durch Verlöten genutzt werden können.

Eine vorteilhafte Weiterbildung der Erfindung sieht vor, dass der Heizkörper in das Gehäuseendstück hineinragt. Zwar ist es auch möglich, dass der Heizkörper in dem Gehäusehauptteil endet, jedoch ergibt sich eine bessere Wärmeankopplung des Kraftstoffs und somit auch eine bessere Verdampfung, wenn der Heizkörper in das Gehäuseendstück hineinragt.

Bevorzugt ist der Heizkörper von einem Sieb, beispielsweise einem Metallgewebe, umgeben. Auf diese Weise kann die Wärmeankopplung des Kraftstoffs an den Heizkörper verbessert werden.

Eine vorteilhafte Weiterbildung der Erfindung sieht vor, dass der Heizkörper in dem Gehäuse von mindestens einer Hülse umgeben ist, die einen Strömungsweg mit zwei in Strömungsrichtung hintereinander angeordneten Abschnitten vorgibt, wobei einer der beiden Abschnitte an der Innenseite der Hülse und der andere Abschnitt an der Außenseite der Hülse entlang führt. Dies kann beispielsweise dadurch erreicht werden, dass die Hülse an einem Ende an dem Gehäuse oder dem Heizkörper befestigt ist, während das andere Ende der Hülse umströmbar ist. Auf diese Weise kann ein verlängerter Strömungsweg und damit eine vergrößerte Verdampferstrecke erzeugt werden. Bevorzugt ist der Rohrheizkörper in dem Gehäuse von zwei oder noch mehr Hülsen umgeben, wobei eine der Hülsen mit einem Ende an dem Gehäuse und eine weitere Hülse mit dem gegenüberliegenden Ende an dem Heizkörper befestigt ist. Die beiden Hülsen können ineinander greifen und zwischen sich einen Abschnitt des Strömungswegs ausbilden. Auf diese Weise kann ein mäanderförmig verlaufender Strömungsweg und damit eine vorteilhaft große Verdampferstrecke vorgegeben werden. Eine lange Verdampferstrecke hat zudem den Vorteil, dass der Dampfdruck verdampften Kraftstoffs genutzt werden kann, um eventuell vorhandene unverdampfte Kraftstoffreste auszustoßen.

Weitere Einzelheiten und Vorteile der Erfindung werden an Ausführungsbeispielen unter Bezugnahme auf die beigefügten Zeichnungen erläutert. Gleiche und einander entsprechende Teile sind dabei mit übereinstimmenden Bezugszahlen versehen. Es zeigen:
- Figur 1: den Aufbau eines Systems zum Einleiten von Kraftstoff in den Abgasstrang eines Kraftfahrzeugs in einer schematischen Skizze;
- Figur 2: ein Ausführungsbeispiel eines Kraftstoffverdampfers in einem Längsschnitt
- Figur 3: ein weiteres Ausführungsbeispiel eines Kraftstoffverdampfers;
- Figur 4: ein weiteres Ausführungsbeispiel eines Kraftstoffverdampfers;
- Figur 5: das Gehäuseendstück des in Figur 2 gezeigten Ausführungsbeispiels;
- Figur 6: eine Schnittansicht zu Figur 5;
- Figur 7: das Gehäuseendstück des in Figur 4 gezeigten Ausführungsbeispiels;
- Figur 8: eine Schnittansicht zu Figur 7;
- Figur 9: ein weiteres Ausführungsbeispiel eines Gehäuseendstücks;
- Figur 10: eine Schnittansicht zu Figur 9.

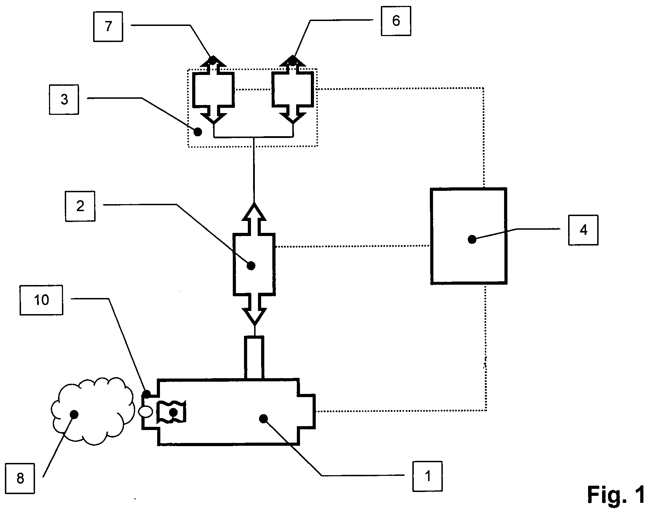

Figur 1 zeigt in einer schematischen Skizze den Aufbau eines Systems zum Einleiten von Kraftstoff in den Abgasstrang eines Kraftfahrzeugs. Das dargestellte System besteht im Wesentlichen aus einem Kraftstoffverdampfer 1, einer Dosierpumpe 2, einem 2/1-Wegeventil 3 und einer Steuereinheit 4. Das 2/1-Wegeventil 3 bildet eine Verzweigung, die einen ersten Zweig mit einer Kraftstoffzufuhr 6 und einen zweiten Zweig mit einer Luftzufuhr 7 aufweist, so dass dem Einlass der Pumpe 2 und damit dem Kraftstoffdampfer 1 wahlweise Kraftstoff oder Luft zugeführt werden kann.

In einer ersten Stellung des 2/1-Wegeventils 3 ist die Pumpe 2 an die Kraftstoffzufuhr 6 angeschlossen, so dass dem Kraftstoffverdampfer 1 bei Betätigung der Pumpe 2 Kraftstoff zugeführt wird. Der Kraftstoff wird in dem Kraftstoffverdampfer 1 verdampft und durch einen Auslass 10 als Dampf 8 in den Gasstrang ausgestoßen werden.

In einer zweiten Stellung des 2/1-Wegeventils ist die Dosierpumpe 2 an eine Luftzufuhr 7 angeschlossen, so dass statt Kraftstoff Luft in den Kraftstoffverdampfer 1 eingebracht werden kann. Auf diese Weise können Kraftstoffreste im Kraftstoffverdampfer ausgetrieben werden und gleichzeitig Ölkohle verbrannt werden, so dass einer Verkokung oder Versottung des Kraftstoffverdampfers entgegengewirkt werden kann.

Das 2/1-Wegeventil, die Dosierpumpe 2 und der Kraftstoffverdampfer 1 können mit einer Steuereinheit 4 gesteuert werden, die für eine geregelte Zufuhr von Kraftstoff zu dem Kraftstoffverdampfer und eine zyklische Luftzufuhr zur Verbrennung von Kraftstoffresten sorgen kann.

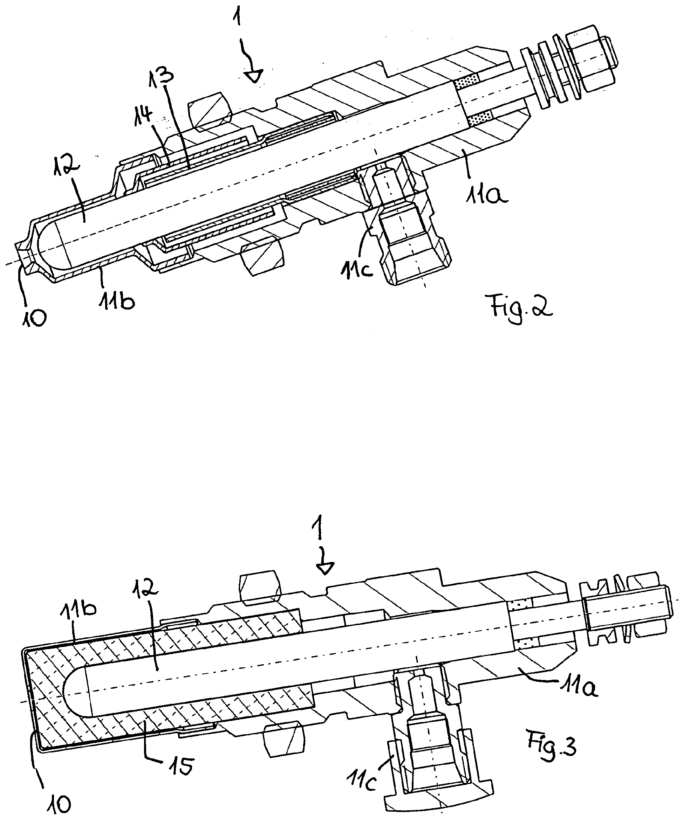

Figur 2 zeigt ein Ausführungsbeispiel eines Kraftstoffverdampfers 1 in einem Längsschnitt. Der Kraftstoffverdampfer 1 hat ein mehrteiliges Gehäuse 11a, 11b mit einem Gehäusehauptteil 11a, der einen stabförmig ausgebildeten Heizkörper 12 umgibt, und einem Gehäuseendstück 11b, das einen Auslass 10 für verdampften Kraftstoff aufweist. Der Gehäusehauptteil 11a ist mit einem Gehäuseseitenteil 11c verbunden, der einen Einlass für zu verdampfenden Kraftstoff aufweist. Die Gehäuseteile 11a, 11b, 11c sind bevorzugt zusammen gesteckt und miteinander verschweißt. Insbesondere der Gehäuseseitenteil 11c kann jedoch auch in den Hauptteil 11b eingeschraubt sein.

Das Gehäuseendstück 11b hat bei dem dargestellten Ausführungsbeispiel einen kleineren Außendurchmesser als der Gehäusehauptteil 11a. Der Außendurchmesser des Gehäuseendstücks 11b verringert sich dabei zu dem Auslass 10 hin stufenförmig, nämlich in zwei Stufen. Der Auslass 10 selbst hat einen sich nach außen hin verbreiternden Öffnungsquerschnitt und ist auf diese Weise als Diffusor ausgebildet. Der Öffnungsquerschnitt kann sich beispielsweise kegelförmig verbreitern.

Der Heizkörper 12 ist in dem Gehäuse 11a, 11b von zwei ineinander greifenden Hülsen 13, 14 umgeben, die zwischen sich einen mäanderförmig verlaufenden Strömungsweg ausbilden. Eine der beiden Hülsen 13, bei dem dargestellten Ausführungsbeispiel die innere Hülse, ist mit dem Gehäuse 11a verbunden. Die andere Hülse 14 ist an ihrem entgegen gesetzten Ende mit dem Heizkörper 12 verbunden. Auf diese Weise ergibt sich vorteilhaft ein verlängerter Strömungsweg für den zu verdampfenden Kraftstoff.

Figur 3 zeigt ein weiteres Ausführungsbeispiel eines Kraftstoffverdampfers 1, das sich von dem vorstehend beschriebenen Ausführungsbeispiel durch die Ausbildung des Gehäuseendstücks 11 b unterscheidet. Bei diesem Ausführungsbeispiel ist das Gehäuseendstück 11 b zylindrisch geformt, hat also einen im Wesentlichen gleichbleibenden Außendurchmesser. Ein weiterer Unterschied zu dem vorstehend beschriebenen Ausführungsbeispiel besteht darin, dass der Heizkörper 12 von einem Sieb 15, beispielsweise aus einem Metallgeflecht, umgeben ist. Dieses Sieb 15 ragt zusammen mit dem Heizkörper 12 in das Gehäuseendstück 11 b hinein und bewirkt eine verbesserte Wärmeankopplung des zu verdampfenden Kraftstoffs an den Heizkörper 12.

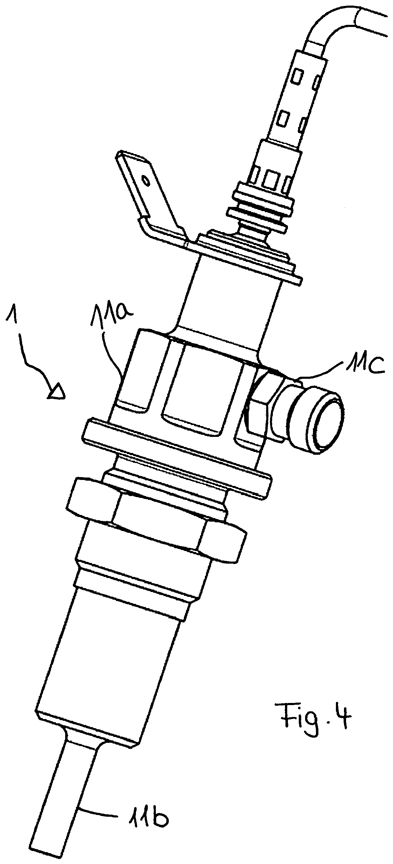

Ein weiteres Ausführungsbeispiel eines Kraftstoffverdampfers 1 ist in Figur 4 dargestellt. Dieses Ausführungsbeispiel unterscheidet sich von dem in Figur 2 dargestellten Ausführungsbeispiel nur in dem anders geformten Gehäuseendstück 11b.

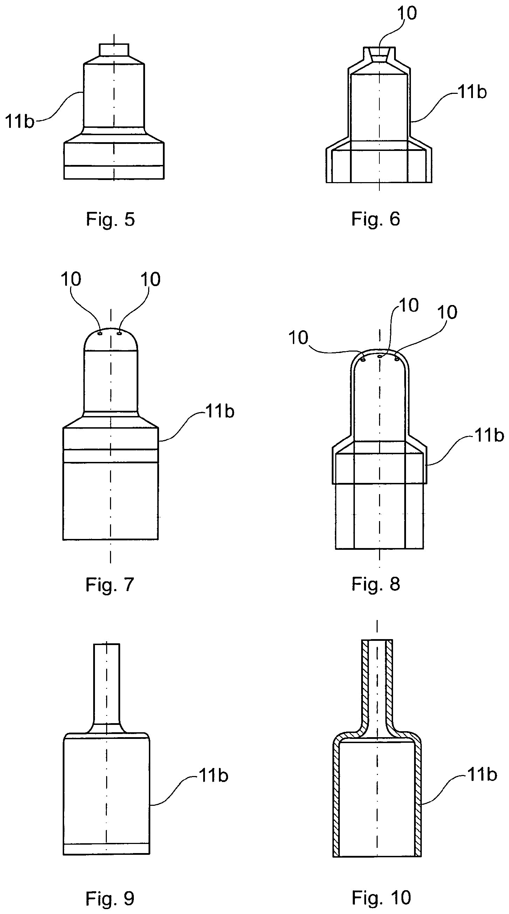

In den Figuren 5 bis 10 sind verschiedene Formen von Gehäuseendstücken 11b gezeigt. Das in den Figuren 5 und 6 gezeigte Ausführungsbeispiel hat eine sich erweiternde Auslassöffnung 10, die als ein Diffusor ausgebildet ist und auf diese Weise eine besonders feine Verteilung von austretendem Kraftstoffdampf oder Nebel bewirkt. Bei dem in den Figuren 7 und 8 dargestellten Ausführungsbeispiel ist der Auslass 10 des Gehäuseendstücks 11 b durch mehrere nebeneinander angeordnete Löcher gebildet. Diese Löcher 10 bilden einen Lochkranz und bewirken so ebenfalls eine feine Verteilung austretenden Kraftstoffs.

In den Figuren 9 und 10 ist ein besonders einfach ausgebildetes Gehäuseendstück dargestellt, bei dem der Auslass 10 durch das Ende eines zylindrischen Fortsatzes gebildet wird.

### Bezugszahlen

- 1: Kraftstoffverdampfer
- 2: Dosierpumpe
- 3: Wegeventil
- 4: Steuereinheit
- 6: Kraftstoffzufuhr
- 7: Luftzufuhr
- 8: Dampf
- 10: Auslass
- 11a: Gehäusehauptteil
- 11b: Gehäuseendstück
- 11c: Gehäuseseitenteil
- 12: Heizkörper
- 13: Hülse
- 14: Hülse
- 15: Sieb

## Patentansprüche

1. System zum Einleiten von Kraftstoff in den Abgasstrang eines Kraftfahrzeugs, mit einem Kraftstoffverdampfer (1), der ein Gehäuse (11a, 11b, 11c) mit einem Einlass und einem Auslass (10) sowie einen in dem Gehäuse (11a) angeordneten Heizkörper (12) aufweist, und
einer Pumpe (2), um Kraftstoff über den Einlass in den Kraftstoffverdampfer (1) zu pumpen (2),
**dadurch gekennzeichnet, dass** der Einlass der Pumpe (2) an einer Verzweigung (3) angeschlossen ist, die einen ersten Zweig (6) zum Zuführen von Kraftstoff und einen zweiten Zweig (7) zum Zuführen von Luft aufweist.

2. System nach Anspruch 1, **dadurch gekennzeichnet, dass** die Verzweigung (3) ein Wegeventil ist, mit dem wahlweise der erste Zweig (6) oder der zweite Zweig (7) absperrbar sind.

3. System nach einem der vorstehenden Ansprüche, **dadurch gekennzeichnet, dass** der Kraftstoffverdampfer (1) ein mehrteiliges Gehäuse (11a, 11b, 11c) aufweist, wobei ein Gehäusehauptteil (11a), der einen stabförmig ausgebildeten Heizkörper (12) umgibt, mit einem Gehäuseendstück (11b) zusammengefügt ist, das einen Auslass (10) aufweist.

4. System nach Anspruch 3, **dadurch gekennzeichnet, dass** das Gehäusehauptteil (11a) mit dem Gehäuseendstück (11b) zusammengesteckt ist.

5. System nach Anspruch 3 oder 4, **dadurch gekennzeichnet, dass** das Gehäuseendstück (11b) in den Gehäusehauptteil (11a) gesteckt ist.

6. System nach einem der Ansprüche 3 bis 5, **dadurch gekennzeichnet, dass** das Gehäuseendstück (11b) einen kleineren Außendurchmesser als der Gehäusehauptteil (11a) aufweist.

7. System nach einem der Ansprüche 3 bis 6, **dadurch gekennzeichnet, dass** sich der Außendurchmesser des Gehäuseendstücks (11b) zu dem Auslass (10) hin verringert.

8. System nach Anspruch 7, **dadurch gekennzeichnet, dass** sich der Außendurchmesser des Gehäuseendstücks (11b) zu dem Auslass (10) hin stufenförmig verringert.

9. System nach einem der Ansprüche 3 bis 8, **dadurch gekennzeichnet, dass** der Auslass (10) als ein Diffusor ausgebildet ist.

10. System nach einem der Ansprüche 3 bis 9, **dadurch gekennzeichnet, dass** der Auslass (10) durch mehrere nebeneinander angeordnete Löcher gebildet ist.

11. System nach einem der Ansprüche 3 bis 10, **dadurch gekennzeichnet, dass** der Heizkörper (12) von einem Sieb (15) umgeben ist.

12. System nach Anspruch 11, **dadurch gekennzeichnet, dass** das Sieb (15) in das Gehäuseendstück (11b) hineinragt.

13. System nach einem der Ansprüche 3 bis 12, **dadurch gekennzeichnet, dass** der Heizkörper (12) in dem Gehäuse (11a) von mindestens einer Hülse (13, 14) umgeben ist, die einen Strömungsweg mit zwei in Strömungsrichtung hintereinander angeordneten Abschnitten vorgibt, wobei einer der beiden Abschnitte an der Innenseite der Hülse (13, 14) und der andere Abschnitt an der Außenseite der Hülse (13, 14) entlangführt.

14. System nach Anspruch 13, **dadurch gekennzeichnet, dass** der Rohrheizkörper (12) in dem Gehäuse (11a) von mindestens zwei Hülsen (13, 14) umgeben ist, wobei eine der beiden Hülsen (13) mit einem Ende an dem Gehäuse (11b) und die andere Hülse (14) mit einem gegenüberliegenden Ende an dem Heizkörper (12) befestigt sind, und wobei die beiden Hülsen (13, 14) ineinander greifen und zwischen sich einen Abschnitt des Strömungswegs bilden.

15. System nach Anspruch 13 oder 14, **dadurch gekennzeichnet, dass** die mindestens eine Hülse (13, 14) in dem Gehäusehauptteil (11a) angeordnet sind.

## Claims

1. A system for introducing fuel into the exhaust tract of a motor vehicle, comprising
a fuel evaporator (1), which comprises a housing (11a, 11b, 11c), which has an inlet and an outlet (10), and a heating device (12) arranged in the housing (11a), and
a pump (2) for pumping (2) fuel into the fuel evaporator (1) via the inlet, **characterized in that** the inlet of the pump (2) is connected to a branching (3), which comprises a first branch (6) for supplying fuel and a second branch (7) for supplying air.

2. The system according to claim 1, **characterized in that** the branching (3) is a control valve by means of which either the first branch (6) or the second branch (7) can be blocked.

3. The system according to any one of the preceding claims, **characterized in that** the fuel evaporator (1) has a housing (11 a, 11 b, 11c) consisting of several parts, wherein a main housing part (11 a), which surrounds a heating device (12) embodied in a rod-shaped manner, is joined with a housing end piece (11b), which encompasses an outlet (10).

4. The system according to claim 3, **characterized in that** the main housing part (11 a) is stuck together with the housing end piece (11 b).

5. The system according to claim 3 or 4, **characterized in that** the housing end piece (11b) is stuck into the main housing part (11a).

6. The system according to any one of claims 3 to 5, **characterized in that** the housing end piece (11b) has a smaller outer diameter than the main housing part (11 a).

7. The system according to any one of claims 3 to 6, **characterized in that** the outer diameter of the housing end piece (11b) decreases towards the outlet (10).

8. The system according to claim 7, **characterized in that** the outer diameter of the housing end piece (11b) decreases step-like towards the outlet (10).

9. The system according to any one of claims 3 to 8, **characterized in that** the outlet (10) is formed as a diffuser.

10. The system according to any one of claims 3 to 9, **characterized in that** the outlet (10) is embodied by means of a plurality of holes, which are arranged next to one another.

11. The system according to any one of claims 3 to 10, **characterized in that** the heating device (12) is surrounded by a screen (15).

12. The system according to claim 11, **characterized in that** the screen (15) projects into the housing end piece (11 b).

13. The system according to any one of claims 3 to 12, **characterized in that** the heating device (12) is surrounded by at least one bushing (13, 14) in the housing (11 a), said bushing providing a flow path comprising two sections, which are arranged downstream from one another in flow direction, wherein one of the two sections leads along the interior of the bushing (13, 14) and the other section leads along the exterior of the bushing (13, 14).

14. The system according to claim 13, **characterized in that** the tubular heating device (12) is surrounded by at least two bushings (13, 14) in the housing (11a), wherein one of the two bushings (13) is fastened to the housing (11b) with one end and the other bushing (14) is connected to the heating device (12) with an opposite end, and wherein the two bushings (13, 14) engage with one another and form a section of the flow path between one another.

15. The system according to claim 13 or 14, **characterized in that** the at least one bushing (13, 14) is arranged in the main housing part (11a).

## Revendications

1. Système d'introduction de carburant dans la conduite de gaz d'échappement d'un véhicule, avec un vaporisateur de carburant (1), qui présente un boîtier (11a, 11b, 11c) avec une entrée et une sortie (10), ainsi qu'un corps de chauffage (12) disposé dans le boîtier (11a), et
une pompe (2), afin de pomper (2) du carburant par l'intermédiaire de l'entrée dans le vaporisateur de carburant (1),
**caractérisé en ce que** l'entrée de la pompe (2) est raccordée à un embranchement (3) qui présente une première branche (6) pour l'alimentation par le carburant et une deuxième branche (7) pour l'alimentation par l'air.

2. Système selon la revendication 1, **caractérisé en ce que** l'embranchement (3) est une vanne directionnelle avec laquelle la première branche (6) ou la deuxième branche (7) peuvent être fermées au choix.

3. Système selon l'une des revendications précédentes, **caractérisé en ce que** le vaporisateur de carburant (1) présente un boîtier (11a, 11b, 11c) en plusieurs parties, où une partie principale de boîtier (11a), qui entoure un corps de chauffage (12) en forme de barre, est assemblée avec une partie terminale de boîtier (11 b) qui présente une sortie (10).

4. Système selon la revendication 3, **caractérisé en ce que** la partie principale de boîtier (11 a) est emboitée avec la partie terminale de boîtier (11 b).

5. Système selon la revendication 3, ou 4, **caractérisé en ce que** la partie terminale de boîtier (11b) est emboitée dans la partie principale de boîtier (11a).

6. Système selon l'une des revendications 3 à 5, **caractérisé en ce que** la partie terminale de boîtier (11b) présente un diamètre extérieur inférieur à celui de la partie principale de boîtier (11a).

7. Système selon l'une des revendications 3 à 6, **caractérisé en ce que** le diamètre extérieur de la partie terminale de boîtier (11b) se rétrécit en direction de la sortie (10).

8. Système selon la revendication 7, **caractérisé en ce que** le diamètre extérieur de la partie terminale de boîtier (11b) se rétrécit de manière graduelle en direction de la sortie (10).

9. Système selon l'une des revendications 3 à 8, **caractérisé en ce que** la sortie (10) est conçue sous la forme d'un diffuseur.

10. Système selon l'une des revendications 3 à 9, **caractérisé en ce que** la sortie (10) est formée par plusieurs trous disposés les uns à côté des autres.

11. Système selon l'une des revendications 3 à 10, **caractérisé en ce que** le corps de chauffage (12) est entouré par un tamis (15).

12. Système selon la revendication 11, **caractérisé en ce que** le tamis (15) pénètre à l'intérieur de la partie terminale de boîtier (11 b).

13. Système selon l'une des revendications 3 à 12, **caractérisé en ce que** le corps de chauffage (12) est entouré dans le boîtier (11a) par au moins une coque (13, 14) qui définit un chemin d'écoulement avec deux portions disposées l'une derrière l'autre dans le sens d'écoulement, où l'une des deux portions longe le côté intérieur de la coque (13,14) et l'autre portion le côté extérieur de la coque (13, 14).

14. Système selon la revendication 13, **caractérisé en ce que** le corps de chauffage (12) est entouré d'au moins deux coques (13, 14) dans le boîtier (11 a), où l'une des deux coques (13) est fixée avec une extrémité sur le boîtier (11 b) et l'autre coque (14) est fixée avec une extrémité située à l'opposé au corps de chauffage (12), et où les deux coques (13, 14) s'interpénètrent et forment entre elles une partie du chemin d'écoulement.

15. Système selon la revendication 13, ou 14, **caractérisé en ce que** l'au moins une coque (13, 14) est disposée dans la partie principale de boîtier (11a).
